# EUROPÄISCHE PATENTANMELDUNG

(11) **EP 2 363 269 A1**
(43) Veröffentlichungstag der Anmeldung: **07.09.2011**
(21) Anmeldenummer: 10015548.0
(22) Anmeldetag: 11.12.2010
(51) Int. Cl.: B29C 65/34, F16L 47/03, B29C 65/36, F16L 47/26

(54) **Verbindungsstück aus thermoplastischem Kunststoff**

(30) Priorität: 02.03.2010 EP 10002095
(71) Anmelder: Kloss, Gunar, 116600 Dalian (CN)
(72) Erfinder: Kloss, Gunar, 116600 Dalian (CN)
(74) Vertreter: Becker, Thomas

(57) **Zusammenfassung**

Die Erfindung betrifft ein Verbindungsstück aus thermoplastischem Kunststoff mit mindestens drei Anschlussstutzen (22,24,26) zur Aufnahme mindestens jeweils einer Anschlussleitung.

## Beschreibung

Die Erfindung betrifft ein Verbindungsstück aus thermoplastischem Kunststoff mit mindestens drei Anschlussstutzen zur Aufnahme mindestens jeweils einer Anschlussleitung. Ein solches Verbindungsstück zum Anschluss von Leitungen für heißes Wasser ist aus der US 5,375,889 bekannt. Eine Kupplung mit drei Anschlussstutzen beschreibt die GB 808,725. Dabei sind in einzelnen Anschlussstutzen elektrische Widerstandsdrähte integriert, um in-situ Schweißverbindungen mit einer korrespondierenden Anschlussleitung durchzuführen.

Ein Verbindungsstück der gattungsgemäßen Art kann auch als sogenannter Sondenkopf innerhalb eines geothermischen Systems eingesetzt werden. Das geothermische System hat beispielsweise folgenden Aufbau:
Von einer Wärmepumpe verläuft eine Rohrleitung für einen Wärmeträger zu einem ersten Anschlussstutzen eines ersten sogenannten Sondenkopfs. Der Sondenkopf weist zwei weitere Anschlussstutzen auf, von denen sich eine erste und eine zweite Vorlaufleitung erstrecken, die in einer korrespondierenden Erdbohrung verlegt sind und jeweils an einem zugehörigen sogenannten Sondenfuß in eine Rückführleitung übergehen, die in korrespondierende Anschlussstutzen eines zweiten Sondenkopfes einmünden, dessen dritter Anschlussstutzen eine weitere Rohrleitung aufnimmt, die zur Wärmepumpe zurückführt.

Entsprechend der Zirkulation entlang der Vor- und Rücklaufleitungen zwischen den Sondenköpfen erwärmt sich der Wärmeträger üblicherweise um einige Grad Celsius auf seinem Weg von der Wärmepumpe ins Erdreich und zurück, so dass ein geschlossenes System für die Zirkulation der Wärmeträgerflüssigkeit besteht.

Die Positionierung von zwei oder mehreren Sondenleitungen in einer korrespondierenden Bohrung erhöht die Effizienz des Wärmeaustauschs mit dem Erdreich, verringert den Strömungswiderstand der Erdwärmesonde und natürlich die Bohrkosten relativ zum Wärmeertrag. Gleichzeitig wird die Sicherheit der geothermischen Anlage erhöht. Wird eine der genannten U-förmigen Sonden zerstört oder verstopft sie kann der Betrieb über die zweite weitergeführt werden.

Die Erfindung beschäftigt sich mit der Ausbildung des genannten Sondenkopfes vor dem Hintergrund, mehrere Anschlussleitungen einfach, sicher, preiswert und schnell anbinden zu können.

Im Stand der Technik erfolgt dies bisher mittels verschiedener Schweißverfahren, beispielsweise Stumpfschweißverfahren oder Kaliberschweißverfahren. In beiden Fällen ist nachteilig, dass jede Anschlussleitung separat angeschweißt werden muss. Das gilt auch für die Verbindungsstücke gemäß US 5,375,889 und GB 808,725 mit je einem Heizdraht und je zwei Anschlusskontakten pro Anschlussstutzen. Alle genannten Schweißverfahren sind empfindlich gegenüber Verschmutzungen, wie sie bei der Verbindung von Erdwärmeleitungen regelmäßig auftreten. Die Verfahren lassen sich nur manuell durchführen. Die Kontrolle der Schweißtemperatur und der Schweißzeit erfolgt meist nur empirisch. Die Qualität der Schweißverbindungen ist deshalb unregelmäßig und oft unzureichend.

Um diese Nachteile zu beseitigen sieht die Erfindung ein Verbindungsstück aus thermoplastischem Kunststoff mit folgenden Merkmalen vor:
- Mindestens drei Anschlussstutzen mit rohrförmigem Innenquerschnitt, der jeweils eine Mittenlängsachse definiert,
- jeder Anschlussstutzen ist zur Aufnahme mindestens einer Anschlussleitung ausgebildet,
- jeder Anschlussstutzen weist im Kontaktbereich zur zugehörigen Anschlussleitung eine Heizeinrichtung auf,
- die Heizeinrichtungen aller Anschlussstutzen sind funktional miteinander verbunden, das heißt elektrisch so verbunden, dass alle Heizeinrichtungen über gemeinsame Anschlusskontakte aktivierbar sind.

Ein erfindungsgemäßes Verbindungsstück ist nach Art eines sogenannten Elektroschweißfitting ausgebildet.

Die Verwendung von Elektroschweißfittings als Muffe zwischen zu verbindenden Rohrleitungen ist bekannt. Erfindungsgemäß wird das Verbindungsstück jedoch selbst als Elektroschweißfitting gestaltet, das heißt alle Anschlussstutzen weisen entsprechende Heizeinrichtungen auf, die integraler Bestandteil des Verbindungsstücks sind und die nach Aktivierung eine gleichzeitige Verschweißung mit allen angeschlossenen Anschlussleitungen ermöglichen.

Daraus wird deutlich, dass ein erfindungsgemäßes Verbindungsstück aufgrund der funktionalen Verbindung aller Heizeinrichtungen die Möglichkeit schafft, in einem einzigen Arbeitsgang (Schweißvorgang) alle Anschlussleitungen parallel (gleichzeitig) an korrespondierende Anschlussstutzen fluiddicht anzuschließen (anzuschweißen) und dies auch in einem automatisierten Verfahren unter gleichen Schweißbedingungen an allen Anschlussstutzen.

Ein zugehöriger Anschlussstutzen kann zwischen seinem Anschlussende für eine zugehörige Anschlussleitung und einem Abschnitt im Abstand zu diesem Anschlussende mit einem kreisförmigen Innenquerschnitt ausgebildet sein. Dabei kann der Innenquerschnitt in Axialrichtung des Anschlussstutzens konstant sein. Ebenso ist eine konische Ausbildung möglich, wobei der größere Innenquerschnitt am Anschlussende liegt. Eine weitere Möglichkeit besteht darin, den Innenquerschnitt vom Anschlussende weg in Axialrichtung des Anschlussstutzens (Anschlussflansches) stufenartig zu verringern. Die entsprechenden Stufen beziehungsweise bei konischer Ausbildung der entsprechende Trichter erleichtern eine Aufnahme und flächige Verbindung zwischen korrespondierenden Wandflächen von Verbindungsstück und Anschlussleitung.

Eine Ausführungsform der Erfindung sieht ein Verbindungsstück mit zwei Anschlussstutzen vor, deren Mittenlängsachsen parallel verlaufen und einem dritten Anschlussstutzen, dessen Mittenlängsachse sich senkrecht zu den beiden parallel verlaufenden Mittenlängsachsen erstreckt. In der Seitenansicht ergibt sich für ein solches Verbindungsstück eine Art L-Form, wobei auf der einen Seite mindestens zwei Anschlussstutzen (zum Anschluss von Erdwärmeleitungen) vorhanden sind, während der rechtwinklig versetzt verlaufende weitere Anschlussstutzen dazu dient, die Rohrleitung von oder zur Wärmepumpe aufzunehmen. Diese Geometrie trägt dem Umstand Rechnung, dass die Verbindungsleitung zwischen Wärmepumpe und Sondenkopf meist im rechten Winkel zu den Anschlussleitungen verläuft, die in der Erdbohrung verlegt sind, wobei letztere in der Regel senkrecht zur Boden-Oberseite verläuft.

Die Ausbildung der Heizeinrichtung an dem jeweiligen Anschlussstutzen kann in Übereinstimmung mit bekannten Elektroschweißfittings erfolgen.

Bei einer Ausführungsform der Erfindung sind die Heizeinrichtungen elektrische Widerstandsheizungen in Form von Drahtwendeln (Wicklungen).

Diese können unmittelbar im inneren Oberflächenbereich der Anschlussstutzen verlaufen oder mit geringem Abstand radial dahinter. In diesem Fall sind die Drähte der Widerstandsheizung vollständig im Kunststoffmaterial des Verbindungsstückes eingebettet. Dies gilt selbstverständlich nicht für elektrische Anschlussleitungen (Anschlusskontakte der Heizelemente), die aus dem Verbindungsstück herausgeführt sind.

Eine alternative Heizeinrichtung ist eine Induktionsheizung, wobei entsprechende Induktionsspulen analog zu den Heizdrähten verlegt werden können.

Die einzelne Heizeinrichtung muss nicht über den gesamten Innenumfang des zugehörigen Anschlussstutzens verlaufen, wenngleich diese Ausführungsform Vorteile aufweist. Sie muss sich auch nicht über die gesamte axiale Länge des Anschlussstutzens erstrecken. Vielmehr kann es durchaus vorteilhaft sein, die Heizeinrichtung mit Abstand zum Anschlussende anzuordnen, jedoch über eine gewisse axiale Länge (Teillänge des Anschlussstutzens), um in jedem Fall eine nicht zur punktuelle oder ringförmige, sondern möglichst großflächige Schweißverbindung zwischen Verbindungsstück und Anschlussleitung zu erhalten.

Wie bereits ausgeführt besteht ein wesentlicher Vorteil des erfindungsgemäßen Verbindungsstücks darin, dass mehrere Heizeinrichtungen funktional miteinander verbunden werden können um so in einem einzigen Schweißvorgang die Schweißverbindungen im Bereich aller Anschlussstutzen gleichzeitig herzustellen.

Als Kunststoff für das Verbindungsstück eignen sich beispielsweise Werkstoffe auf Basis: Polyethylen (PE), Polypropylen (PP), Polybutylen (PB).

Die erfindungsgemäße Erfindung ermöglicht es, den Schweißvorgang zu automatisieren, beispielsweise durch Festlegung zugehöriger Schweißparameter (wie Spannung, Stromstärke, Widerstand des Bauteils, Schweißzeit, Abkühlzeit, Bezeichnung des Bauteils, etc.), die am Verbindungsstück beispielsweise über sogenannte Barcodes definiert und von einem zugehörigen Schweißgerät eingelesen werden können. Auf diese Weise wird eine gleichmäßige Schweißverbindung auf Grund optimierter Schweißparameter ermöglicht.

Wie ausgeführt können die Heizeinrichtungen beispielsweise aus elektrischen Widerstandsdrähten bestehen (gebildet werden).

Die Widerstandsdrähte können entlang der Anschlussstutzen wendelförmig (spiralförmig) verlegt werden, so dass umfangsseitig ein gleichmäßiger Energieeintrag beim Verbinden (Schweißen) erfolgt. Die funktionale Verbindung der Heizeinrichtungen kann bei einem Verbindungsstück mit 3 Anschlussstutzen so erfolgen: an zwei Anschlussstutzen sind die Widerstandsdrähte jeweils mit einem Ende als Anschlusskontakt ausgebildet. Entlang dieser Anschlussstutzen verlaufen die Drähte jeweils wendelartig in der zugehörigen Wand. Das jeweils andere Ende jedes Heizelements ist bis in den Bereich des dritten Anschlussstutzens verlängert, wo die Widerstandsdrähte analog in der zugehörigen Wand verlaufen und an einem Verbindungspunkt zusammengeführt sind. Dabei können die beiden Heizdrähte entlang des dritten Anschlussstutzens nach Art einer Doppelwendel verlegt werden, wobei die beiden Widerstandsdrähte mit Abstand zueinander verlaufen, bevor sie am Verbindungspunkt zusammengeführt werden. Der "Verbindungspunkt" kann auch fiktiv sein, das heißt, ein einziger Widerstandsdraht wird entlang aller Anschlussstutzen von einem ersten Anschlusskontakt zu einem zweiten Anschlusskontakt geführt, wobei sicherzustellen ist, dass sich einzelne Abschnitte des Heizdrahtes nicht berühren (Kurzschlussgefahr). Auch bei dieser Ausführungsform kann der Heizdraht entlang einzelner Abschnitte als "Doppelwendel, Doppelwicklung" oder in ähnlicher Geometrie konfektioniert sein.

Für alle Varianten gilt, dass die Widerstandsdrähte unmittelbar im Bereich der Innenwand der zugehörigen Anschlussstutzen oder etwas versetzt dazu verlaufen können. In jedem Fall ist sicherzustellen, dass die gewünschte Heizwirkung zur Durchführung eines korrespondierenden Schweißvorgangs möglich ist.

Die vorgenannten Ausführungsformen mit Widerstandsdrähten lassen sich analog für andere Heizeinrichtungen, beispielsweise Induktionsheizungen mit Induktionsspulen realisieren.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert. Dabei zeigen ― jeweils in schematisierter Darstellung ―
Figur 1: Den grundsätzlichen Aufbaus eines geothermischen Systems unter Verwendung erfindungsgemäßer Verbindungsstücke,
Figur 2: eine Ansicht eines Sondenkopfes gemäß Figur 1 von unten
Figur 3: eine Ansicht des Sondenkopfes gemäß Figur 2 von oben
Figur 4: eine Seitenansicht des Sondenkopfes nach Figur 2.
Figur 5: einen Sondenkopf mit 6 Anschlussstutzen (Prinzipskizze).

In den Figuren sind gleiche oder gleichwirkende Bauteile mit gleichen Bezugsziffern dargestellt.

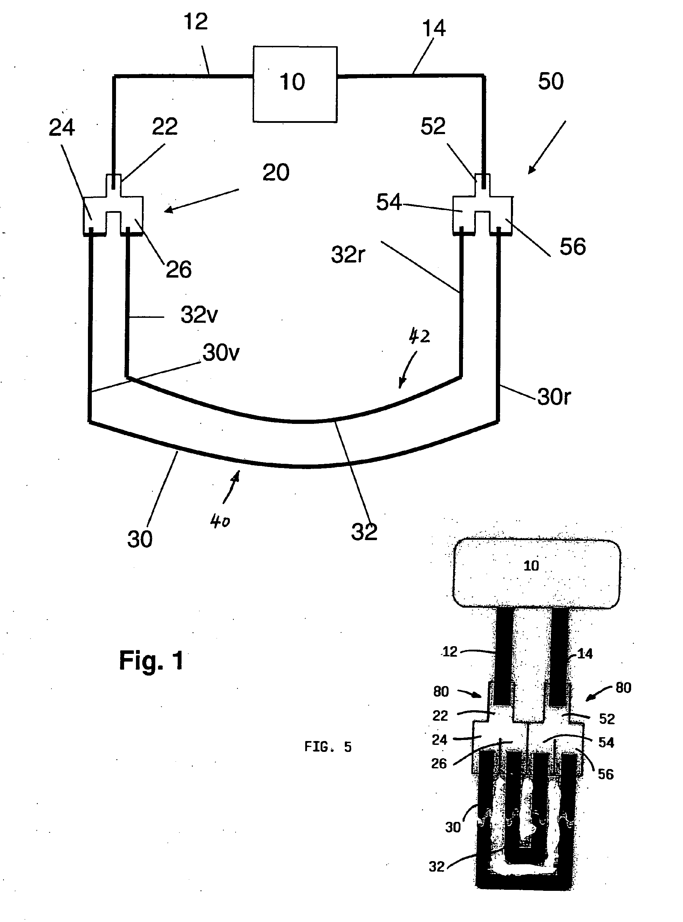

In Figur 1 bezeichnet das Bezugszeichen 10 eine Wärmepumpe. Von der Wärmepumpe 10 verläuft eine Rohrleitung 12, die auch als Sammelzulaufrohr bezeichnet werden kann, zu einem ersten Sondenkopf 20 mit drei Anschlussstutzen 22, 24, 26. Die Rohrleitung 12 ist mit dem ersten Anschlussstutzen 22 verbunden.

Von den Anschlussstutzen 24, 26 verlaufen U-förmige Sondenleitungen 30, 32 jeweils mit einem Vorlauf-Abschnitt 30v, 32v bis zu einem U-förmigen Sondenfuß 40, 42 und dann über entsprechende Rücklaufabschnitte 30r, 32r parallel zu den Vorlauf-Abschnitten 30v, 32v zurück bis zu einem zweiten Sondenkopf 50, wo sie in zugehörige Anschlussstutzen 54, 56 einmünden. Der zweite Sondenkopf 50 hat einen weiteren Anschlussstutzen 52, von dem eine Rohrleitung 14 zurück zur Wärmepumpe 10 führt.

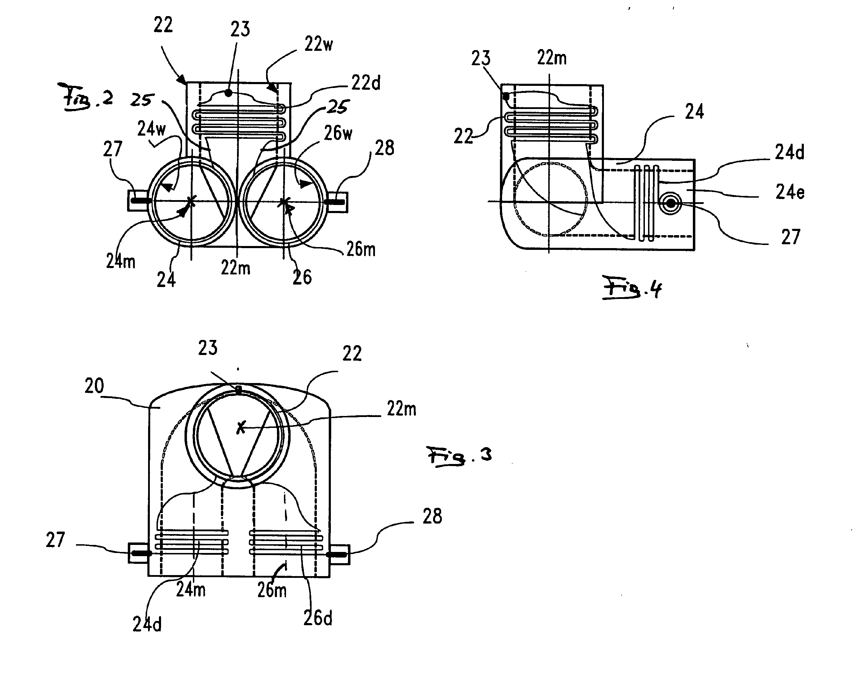

Der erfindungsgemäße Aufbau der Sondenköpfe 20, 50 ergibt sich aus den weiteren Figuren 2 bis 4, wobei der dort dargestellte Sondenkopf 20 baugleich mit dem Sondenkopf 50 gemäß Figur 1 ist.

Die Figuren zeigen, dass der Anschlussstutzen 22 im rechten Winkel zu den Anschlussstutzen 24, 26 verläuft, wobei die Anschlussstutzen 24, 26 parallel zueinander ausgerichtet sind.

Alle drei Anschlussstutzen 22, 24, 26 sind innen rohrförmig gestaltet, das heißt, sie weisen eine zylindrische Innenwand auf, beispielsweise beim Anschlussstutzen 26 durch das Bezugszeichen 26w charakterisiert.

Die Anschlussstutzen 22, 24, 26 stehen strömungstechnisch in Verbindung, das heißt die über die Rohrleitung 12 und den Anschlussstutzen 22 zugeführte Sole (das Wärmeträgerfluid) durchströmt den Sondenkopf 20 und tritt über die Anschlussstutzen 24, 26 in die angeschlossenen Sondenleitungen 30, 32 aus.

Der Sondenkopf 20 besteht aus Polyethylen (PE).

Die Anschlussstutzen 24, 26 sind, mit Abstand zu ihren jeweiligen Anschlussenden (beispielhaft für den Anschlussstutzen 24 mit 24e bezeichnet) innenseitig mit einer Wicklung ausgebildet, die aus einem Widerstandsdraht 24d, 26d besteht und jeweils eine Heizwendel bildet. Ein Ende jeder Heizwendel ist an einen zugehörigen (äußeren) Anschlusskontakt 27, 28 angeschlossen beziehungsweise bildet diesen Anschlusskontakt, wobei der Anschlusskontakt 27 radial vom Anschlussstutzen 24 absteht, während der Anschlusskontakt 28 analog vom Anschlussstutzen 26 verläuft, wie insbesondere in Figur 3 dargestellt.

Das jeweils andere Ende jeder Wicklung (jedes Widerstandsdrahtes 24d, 26d) verläuft durch das Kunststoffmaterial des Sondenkopfes in den Bereich des Anschlussstutzens 22, wo die entsprechenden Widerstandsdrähte analog zu den Wicklungen (Heizwendeln) im Bereich der Anschlussstutzen 24, 26 entlang der Innenwand 22w des Anschlussstutzens 22 verlaufen und an einem Verbindungspunkt 23 zusammengeführt sind. Analog könnte der Widerstandsdraht 24d vom Anschlusskontakt 27 zum Anschlusskontakt 28 einteilig durchlaufen und die Funktion des Widerstandsdrahts 26d übernehmen.

Die Heizwendel im Bereich des Anschlussstutzens 22 wird entsprechend aus zwei Drahtabschnitten, je eine von den Heizdrähten 24d, 26d zusammen gebildet. Es entsteht eine Art Doppelwicklung (Doppelwendel). Diese Konstruktion vereinfacht die Verlegung und Führung der Widerstandsdrähte sowie deren Verbindung an den gemeinsamen Anschlusskontakten 27, 28.

Es ist analog möglich, die Heizdrähte von anderen Anschlussstutzen zu einem weiteren Anschlussstutzen zu verlängern und dort einfach doppelt zu konfektionieren, wobei die zugehörigen Drähte oder Drahtabschnitte funktional verbunden sind.

Die Heizdrähte 24d, 26d, 22d sind bei der Herstellung des Sondenkopfes in-situ in das thermoplastische Material eingearbeitet worden, und zwar jeweils mit Abstand zu den Anschlussenden (wie 24e) und jeweils in einer axialen Länge/Tiefe (d) der jeweiligen Mittenlängsachse 22m, 24m, 26m jedes Anschlussstutzens 22, 24, 26. Daraus ergibt sich für jede Heizwendel, dass ein Zylinderabschnitt jedes Anschlussstutzens 22, 24, 26 beheizbar ist, um nach Anschluss eines entsprechenden Schweißgerätes an die Anschlusskontakte 27, 28 in einem gemeinsamen Arbeitsgang die Rohrleitung 12 beziehungsweise die Sondenleitungen 30, 32 an die zugehörigen Anschlussstutzen 22, 24, 26 materialschlüssig anbinden zu können.

Aufgrund des Anschlusses aller Heizeinrichtungen an gemeinsame Anschlusskontakte 27,28 und aufgrund der Integrierung der Heizwendeln/Heizdrähte 22d, 24d, 26d in den Sondenkopf und Ausbildung des Sondenkopfes nach Art eines Elektroschweißfittings können die Schweißparameter exakt definiert werden, wodurch die Schweißung selbst optimiert wird.

Die Ausführungsform nach Figur 5 zeigt einen Sondenkopf mit 6 Anschlussstutzen und entspricht der Anordnung gemäß Figur 1 mit der Maßgabe, dass die dort getrennten Sondenköpfe 20, 50 mit je 3 Anschlussstutzen zu einem Bauteil 80 vereint sind. Auch hierbei genügen jedoch 2 Anschlusskontakte 27, 28 für ein Schweißgerät, um 6 Schweißverbindungen gleichzeitig ausführen zu können. Dazu sind die mehreren Widerstandsdrähte (Heizeinrichtungen) entlang der 6 Anschlussstutzen elektrisch (funktional) miteinander verbunden.

Bei allen Ausführungsformen wird das gleiche Ergebnis erreicht, wenn die Heizdrähte materialschlüssig verbunden werden, so dass die Heizeinrichtungen an allen Anschlussstutzen quasi von einem einzigen Heizdraht gebildet werden, der von einem Anschlusskontakt entlang aller Anschlussstutzen zum weiteren Anschlusskontakt verläuft.

## Patentansprüche

1. Verbindungsstück aus thermoplastischem Kunststoff mit folgenden Merkmalen:
1.1mindestens drei Anschlussstutzen (22, 24, 26) mit rohrförmigem Innenquerschnitt, der jeweils eine Mittenlängsachse (22m, 24m, 26m) definiert,
1.2jeder Anschlussstutzen (22, 24, 26) ist zur Aufnahme jeweils mindestens einer Anschlussleitung (12, 30, 32) ausgebildet,
1.3jeder Anschlussstutzen (22, 24, 26) ist im Kontaktbereich zur zugehörigen Anschlussleitung (12, 30, 32) mit einer Heizeinrichtung ausgebildet,
1.4die Heizeinrichtungen aller Anschlussstutzen (22, 24, 26) sind funktional miteinander verbunden.

2. Verbindungsstück nach Anspruch 1, bei dem mindestens ein Anschlussstutzen (26) zwischen seinem Anschlussende (26e) mit der Anschlussleitung (32) und einem Abschnitt im Abstand zum Anschlussende (26e) mit kreisförmigen Innenquerschnitt ausgebildet ist.

3. Verbindungsstück nach Anspruch 2 mit wechselnden Innenquerschnitten zwischen dem Anschlussende und dem Abschnitt im Abstand zu diesem Anschlussende.

4. Verbindungsstück nach Anspruch 1 mit zwei Anschlussstutzen (24, 26), deren Mittenlängsachsen (24m, 26m) parallel verlaufen und einem drittem Anschlussstutzen (22), dessen Mittenlängsachse (22m) sich senkrecht zu den beiden parallel verlaufenden Mittenlängsachsen (24m, 26m) erstreckt.

5. Verbindungsstück nach Anspruch 1, bei dem die Heizeinrichtungen elektrische Widerstandsheizungen in Form von Drahtwendeln aus Widerstandsdrähten (22d, 24d, 26d) sind.

6. Verbindungsstück nach Anspruch 1, bei dem die Heizeinrichtungen Induktionsheizungen sind.

7. Verbindungsstück nach Anspruch 1, bei dem die Heizeinrichtungen über den gesamten Innenumfang des zugehörigen Anschlussstutzens (22, 24, 26) und in Richtung der Mittenlängsachse (22m, 24m, 26m) mindestens über eine Teillänge des Anschlussstutzens wirksam sind.

8. Verbindungsstück nach Anspruch 1 mit äußeren Anschlusselementen für die Heizeinrichtungen.

9. Verbindungsstück nach Anspruch 1 auf Basis mindestens eines Kunststoffs aus der Gruppe: Polyethylen (PE), Polypropylen (PP), Polybutylen (PB).

10. Verbindungsstück nach Anspruch 1, bei den die Heizeinrichtungen aus elektrischen Widerstandsdrähten (22d, 24d, 26d) bestehen.

11. Verbindungsstück nach Anspruch 10, bei dem die jeweils an zwei Anschlussstutzen (24, 26) als Wendel ausgebildeten Widerstandsdrähte (24d, 26d) jeweils mit einem Ende an einen zugehörigen Anschlusskontakt (27, 28) angeschlossen sind und das jeweils andere Ende (25) jeder Wendel in den Bereich des weiteren Anschlussstutzens (22) verläuft, wo beide Widerstandsdrähte (24d, 26d) mit Abstand zueinander jeweils als Wendel verlaufen und an einem Verbindungspunkt (23) zusammengeführt sind.

12. Verbindungsstück nach Anspruch 10, bei dem die Widerstandsdrähte (24d, 26d) von mindestens zwei Anschlussstutzen (24, 26) zu mindestens einem weiteren Anschlussstutzen (22) weitergeführt und dort als Mehrfachwicklung (22d) konfektioniert sind.

13. Verbindungsstück nach Anspruch 12, bei dem die Widerstandsdrähte (24d, 26d) am weiteren Anschlussstutzen an einem gemeinsamen Verbindungspunkt (23) zusammengeführt sind.

14. Verbindungsstück nach Anspruch 10, bei dem die Widerstandsdrähte (24d, 26d) materialschlüssig ineinander übergehen.

15. Verbindungsstück nach Anspruch 1, bei dem alle Heizeinrichtungen aller Anschlussstutzen (22,24,26) von einem einzigen elektrischen Widerstandsdraht gebildet werden, der sich von einem ersten Anschlusskontakt (27) entlang aller Anschlussstutzen (22,24,26) zu einem zweiten Anschlusskontakt (28) erstreckt.
